# EUROPÄISCHE PATENTSCHRIFT

(11) **EP 0 250 757 B1**
(45) Veröffentlichungstag und Bekanntmachung des Hinweises auf die Patenterteilung: **29.09.1993**
(21) Anmeldenummer: 87106127.1
(22) Anmeldetag: 28.04.1987
(51) Int. Cl.: G01T 1/16, G01T 1/18

(54) **Strahlungsmesseinrichtung für Photonen-und/oder Korpuskularstrahlungen**
Apparatus for measuring photon and/or corpuscular radiation
Appareil de mesure de rayonnement de photon et/ou corpusculaire

(30) Priorität: 03.05.1986 DE 3615054
(43) Veröffentlichungstag der Anmeldung: 07.01.1988
(73) Patentinhaber: Automess - Automation und Messtechnik GmbH, D-68526 Ladenburg (DE)
(72) Erfinder: Buttler, Wilhelm, Dr., D-6802 Ladenburg (DE)
(74) Vertreter: Klose, Hans, Dipl.-Phys.

(56) Entgegenhaltungen:
- DE-A- 2 634 231
- DE-A- 2 635 223
- FR-A- 2 456 330

## Beschreibung

Die Erfindung betrifft eine Strahlungsmeßeinrichtung für Photonen- und/oder Korpuskularstrahlungen nach dem Oberbegriff des Anspruchs 1. Derartige Strahlungsmeßeinrichtungen werden zur Erfüllung von Meß- und Überwachungsaufgaben eingesetzt, z.B. in Forschungsinstituten, bei Überwachungsbehörden und in Kernkraftwerken. Da es keine Strahlungsdetektoren gibt, die für alle in Frage kommenden Strahlungsarten und Intensitätsbereiche geeignet sind, können an die Meßgeräte meist Sonden mit unterschiedlichen Detektoren angeschlossen werden.

Für den praktischen Einsatz ist es wünschenswert, daß ein beliebiges Meßgerät gleicher Bauart mit einer beliebigen Sonde gleicher Bauart verwendet werden kann. Strahlungsdetektoren gleicher Bauart liefern aus fertigungstechnischen Gründen bei gleicher Dosisleistung unterschiedliche Impulsraten oder Analogwerte, die z.B. im Bereich +/-30 % liegen können, bezogen auf den Mittelwert. Entsprechend schwanken auch die Anzeigen eines Meßgerätes beim Sondentausch, hinzu kommen meist noch Schwankungen von anderen Einflußgrößen.

Anzeigeschwankungen in dieser Größe sind für fast alle Anwendungen nicht tragbar. In den PTB-Mitteilungen 4/74, S. 271, wird beispielsweise für die Dosisleistungsanzeige von Ortsdosimetern, die für die Eichung zugelassen sind, ein zulässiger Fehler von max.+/-20 % gefordert. Solche Forderungen lassen sich erfüllen, wenn einem bestimmten Meßgerät eine bestimmte Sonde zugeordnet wird. Bisher sind von der PTB nur derartige Zuordnungen zur Eichung zugelassen worden. Diese Zuordnung hat erhebliche Nachteile zur Folge: Mehraufwand an organisatorischen Maßnahmen, erhebliche zusätzliche Fehlerquellen, höherer Bevorratungsaufwand. Eine engere Tolerierung der Detektoren würde eine erhebliche Kostensteigerung bedeuten.

Aus der DE-A-29 18 611 ist eine Strahlungsmeßeinrichtung bekannt, bei der durch Streuung verschiedener Detektoren bedingte Meßfehler durch Verwendung eines einstellbaren Widerstandes ausgleichbar sind. Mit diesem Widerstand wird die Zeitkonstante einer Impulsformerschaltung beeinflußt. Die elektronische Totzeit dieser Impulsformerschaltung muß immer die Eigentotzeit des Detektors überschreiten, wodurch sich der statistische Fehler vergrößert. Eine Korrektur von Sättigungsverlusten und eine Sondenerkennung ist mit der bekannten Einrichtung nicht möglich.

Der Erfindung liegt die Aufgabe zugrunde, preisgünstige Strahlungsmeßeinrichtungen zu schaffen, die bei voller Austauschbarkeit von Sonden und Meßgeräten die bisher bekannten Anzeigeschwankungen unter Bewahrung des größtmöglichen Meßbereiches und der höchstmöglichen statistischen Genauigkeit auf vernachlässigbare Werte verringern und die PTB-Forderungen erfüllen. Diese Aufgabe wird bei einer gattungsgemäßen Einrichtung durch die kennzeichnenden Merkmale des Anspruchs 1 gelöst.

In der erfindungsgemäßen Strahlungsmeßeinrichtung wird die oben erwähnte Impulsformerschaltung nicht benötigt.

Soll mit einer erfindungsgemäßen Strahlungsmeßeinrichtung ein großer Intensitätsbereich erfaßt werden, der von einem einzigen Detektor nicht überstrichen wird, und/oder sollen unterschiedliche Strahlungsarten, wie z.B. Photonen- und Neutronenstrahlung, erfaßt werden, für die unterschiedliche Detektoren notwendig sind, müssen Sonden unterschiedlicher Bauart verwendet werden.

Es sind Strahlungsmeßeinrichtungen bekannt, bei denen im Meßgerät angezeigt wird, wenn eine Sonde angeschlossen ist, z.B. mittels einer Kurzschlußbrücke im Steckeranschluß der Sonde. Eine unterschiedliche Sondenanzeige bei einer Vielzahl von Sondenbauarten ist mit diesem Verfahren wegen der erforderlichen Zahl von Steckeranschlüssen praktisch nicht möglich. Die erfindungsgemäße Strahlungsmeßeinrichtung ermöglicht hingegen in einer weiteren Ausbildung die unterschiedliche Anzeige einer größeren Zahl von Sonden im Meßgerät ohne irgendeine zusätzliche Leitung zwischen Meßgerät und Sonde.

Sollen in einer Sonde mehrere Detektoren mit Korrekturvorrichtungen gemäß Anspruch 1 verwendet werden, ist zur Übermittlung der entsprechenden Informationen ebenfalls keine weitere Leitung zwischen Meßgerät und Sonde erforderlich.

Die zum Betrieb der Detektoren erforderliche Hochspannung kann mittels eines Spannungswandlers in der Sonde erzeugt werden. Dadurch ist die Anpassung an eine Vielzahl von Detektoren mit unterschiedlichem Spannungsbedarf möglich. Das Meßgerät kann mit einem oder mehreren Detektoren ausgerüstet sein, die ebenfalls über die erfindungsgemäßen Korrekturvorrichtungen verfügen und die bei Anschluß einer Sonde durch den Rechner im Meßgerät ignoriert werden.

Die mit der Erfindung erzielten Vorteile bestehen insbesondere darin, daß bei einem beliebigen Austausch von Sonden gleicher Bauart und Meßgeräten gleicher Bauart die durch die Detektorsteuerungen bedingten Meßfehler so erheblich reduziert werden, daß sie für die praktische Anwendung der Geräte ohne Belang sind. Durch die Korrektur der Sättigungsverluste der Detektoren wird hierbei auch der Meßbereich für höhere Strahlungsintensitäten wesentlich erweitert, weil der Rechner aus den Korrekturwerten die gekrümmte Empfindlichkeitskurve des Detektors linearisieren kann. Dies ermöglicht einfache digitale und/oder analoge Anzeigesysteme. Speziell kalibrierte Analogskalen, die jeweils nur für eine Detektorbauart gelten, sind nicht erforderlich.

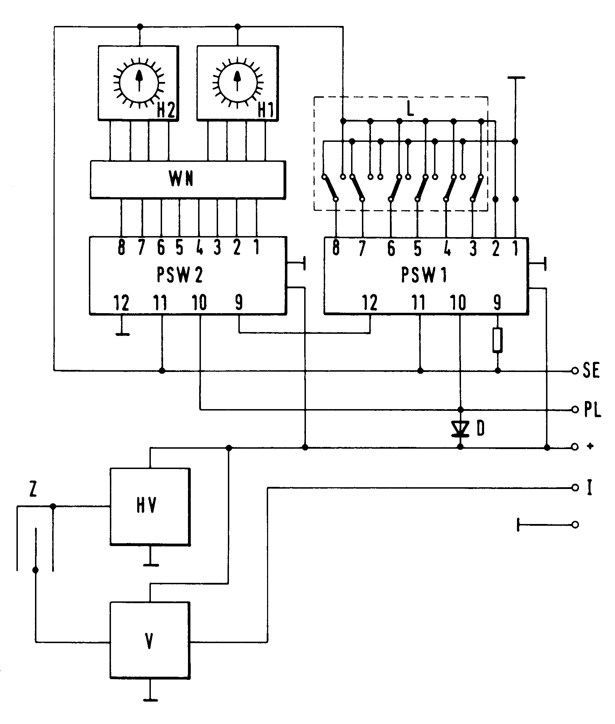

Ein Ausführungsbeispiel der Erfindung ist in der Zeichnung dargestellt und wird im folgenden näher beschrieben. Dargestellt ist der Aufbau einer erfindungsgemäßen Sonde. Sie kann über ein fünfadriges Kabel mit den Anschlüssen SE, PL, +, I, "Masse" mit dem Meßgerät verbunden werden. Über den Anschluß "+" wird der Sonde eine Versorgungsspannung von beispielsweise 5 V aus dem Meßgerät zugeführt.

Ein Zählrohr Z dient als Strahlungsdetektor. Ein Gleichspannungswandler HV erzeugt die Zählrohrbetriebsspannung. Die Zählrohrimpulse gelangen über den Verstärker V und den Anschluß I zum Meßgerät. H1 und H2 sind binärcodierte Hexadezimal-Drehschalter; sie lassen sich auf eine der 16 Stellungen 0 bis 9 und A bis F einstellen. Über eine Widerstandsnetzwerk WN sind die Schalter mit dem 8-bit-Parallel-Serien-Wandler (PSW) PSW 2 verbunden. Die bit-Anschlüsse 3 bis 8 des PSW 1 führen zu sechs Lötbrücken L, bit-Anschluß 1 liegt an "Masse".

Für das Zählrohr Z werden zwei Kalibrierpunkte festgelegt, beim Zählrohr VALVO ZP 1310 beispielsweise eine Photonenstrahlung mit Dosisleistungswerten von 0,2 mSv/h und 0,2 Sv/h. Es sollen Zählrohre im Schwankungsbereich von +/- 30 % verwendet werden. Der Schalter H1 dient zur Erfassung des Korrekturwertes bei 0,2 mSv/h. Hierzu wird jeder Einstellung von H1 ein Teil des Schwankungsbereichs zugeordnet, z.B. 0: -26% bis - 30%, 1: -22% bis - 26% usw. bis F: + 26% bis + 30%. Wird beispielsweise bei einem bestimmten Zählrohr im Strahlenfeld von 0,2 mSv/h eine Impulsrate gemessen, die 0,15 mSv/h entspricht, wird H1 auf 1 gestellt. Entsprechend wird H2 bei 0,2 Sv/h eingestellt.

Die Lötbrücken L dienen zur Einstellung des Sondentyps, hierfür sind 6 bit vorgesehen. In der Zeichnung ist die Typenbezeichnung "16" eingestellt.

Wird die Sonde mit dem eingeschalteten Meßgerät verbunden, registriert der Rechner, daß bit 1 des PSW 1 an "Masse" liegt, d.h. eine Sonde ist angeschlossen. Daraufhin veranlaßt der Rechner, daß die Leitung PL (parallel load) kurzfristig an "Masse" gelegt wird und dadurch die Inhalte der Speicher L, H1 und H2 von den PSW übernommen werden. Über die Leitung SE gelangen die Speicherinhalte in den Rechner, der die von Z aufgenommene Impulsrate entsprechend der Einstellung von H1 und H2 korrigiert und zur Anzeige bringt. Die durch die Zählrohrstreuungen bedingte Schwankung der Anzeige wird hierdurch auf ca. +/- 2 % begrenzt. Die Typenbezeichnung wird ebenfalls zur Anzeige begracht. Nach Beendigung des Abfragezyklus wird ein neuer Abfragevorgang gestartet und somit der erfaßte Meßwert laufend aktualisiert.

Wird eine Sonde mit zwei Zählrohren bestückt, z.B. zur Bereichserweiterung, wird ein weiterer PSW 2ʹ mit PSW 1 und PSW 2 in Reihe geschaltet, der über zwei weitere Drehschalter H1ʹ und H2ʹ die Korrektureinstellungen für das zweite Zählrohr erhält. Zur Abfrage ist weiterhin nur die Leitung SE erforderlich. Die Umschaltung der Detektoren erfolgt automatisch durch den Rechner.

Wird ein und dieselbe Sonde mit einem beliebigen Meßgerät gleicher Bauart kombiniert, zeigen die Meßgeräte jeweils den gleichen Wert an, da die Rechner die gleichen Informationen erhalten.

Anstelle der mechanischen Speicher H1, H2 und L können auch elektronische Speicher verwendet werden. Die Erfindung ist nicht auf die Verwendung von Zählrohren beschränkt, es können z.B. auch Ionisationskammern oder Szintillatoranordnungen verwendet werden. Die Erfindung ist weiterhin nicht auf die in der Zeichnung dargestellte Schaltungsanordnung beschränkt, beispielsweise kann der bit-Anschluß 1 von PSW 1 auch zur "+"-Leitung geführt werden.

## Patentansprüche

1. Strahlungsmeßeinrichtung für Photonen- und/oder Korpuskularstrahlung bestehend aus:
- einem Meßgerät,
- einer Sonde, die mindestens einen Detektor (Z) aufweist, der elektrische Impulsraten oder ein analoges Signal als maß für die Strahlungsintensität liefert, und
- einer lösbaren Kabelverbindung zwischen Meßgerät und Sonde
dadurch gekennzeichnet,
- daß die Sonde einen digitalen Speicher (H1, H2) sowie einen daran angeschlossenen Parallel-Serien-Wandler (PSW2) aufweist
und
- daß im Meßgerät ein Rechner vorgesehen ist, der über die Leitung (SE) der lösbaren Kabelverbindung und den Parallel-Serien-Wandler (PSW2) mit dem digitalen Speicher (H1, H2) verbindbar ist,
- wobei im Speicher (H1, H2) Korrekturwerte digital gespeichert sind, die bei der Kalibrierung der Sonde sowohl im Hinblick auf die Empfindlichkeitsstreuung des Detektors (Z) bei einer niedrigen Strahlungsintensität als auch im Hinblick auf die Streuung der Sättigungsverluste des Detektors (Z) bei einer hohen Strahlungsintensität erfaßt worden sind,
und
- wobei durch den Rechner unter Verwendung der gespeicherten Korrekturwerte die vom Detektor gelieferten Meßdaten derart korrigierbar sind, daß bei Verwendung einer beliebigen Sonde gleicher Bauart an ein und demselben Meßgerät der durch Detektorstreuungen bedingte Meßfehler vernachlässigbar klein ist und daß bei der Kombination eines beliebigen Meßgerätes gleicher Bauart mit ein und derselben Sonde jeweils derselbe Meßwert angezeigt wird.

2. Strahlungsmeßgerät nach Anspruch 1,
dadurch gekennzeichnet, daß an das Meßgerät wahlweise Sonden unterschiedlicher Bauart angeschlossen werden können, deren unterschiedliche Typenbezeichnungen in einem Speicher (L) innerhalb der Sonde gespeichert werden, wobei der Speicher über einen zweiten Parallel-Serien-Wandler (PSW1) und über dieselbe Leitung (SE) mit dem Rechner verbindbar ist zwecks Zuordnung der Speicherinhalte (H1, H2) zum Sondentyp.

3. Strahlungsmeßgerät nach einem der Ansprüche 1 bis 2,
dadurch gekennzeichnet, daß sich in einer Sonde mehr als ein Detektor befindet, wobei für jeden Detektor Korrekturvorrichtungen vorgesehen sind, deren Informationen ebenfalls über die Leitung (SE) zum Rechner gelangen.

4. Strahlungsmeßgerät nach einem der Ansprüche 2 bis 3,
dadurch gekennzeichnet, daß das erste bit der hintereinander geschalteten Parallel-Serien-Wandler an "Masse" liegt, wodurch der Rechner über die Leitung (SE) den erfolgten Anschluß einer Sonde registriert und daraufhin eine zweite Leitung (PL) an "Masse" legt, wodurch der Inhalt der Speicher von den PSW übernommen wird und über die Leitung (SE) vom Rechner gelesen werden kann.

## Claims

1. Radiation measurement device for photon or corpuscular radiation, comprising
- a measuring apparatus,
- a probe having at least one detector (Z) which delivers an electrical pulse stream or an analogue signal as a measure of radiation intensity, and
- a releasable cable connector between the measuring apparatus and the probe,
characterised in that
- the probe is provided with a digital store (H1,H2) and a parallel-serial converter (PSW2) connected thereto, and
- a calculator is provided in the measurement apparatus which is connectable with the digital store (H1,H2) through a conductor (SE) of the releasable connector and the parallel-serial converter (PSW2),
- whereby the digital store (H1,H2) stores digital correction values determined during calibration of the probe and in relation to the sensitivity variation of the detector (Z) at low radiation intensity and in relation to the variation of the saturation losses of the detector (Z) at high radiation intensity, and
- whereby the calculator uses the stored correction values to correct measured values produced by the detector in such a way that when any probe of the same type of construction is used with the same measuring apparatus, the measuring error resulting from the detector variations is negligibly small, and when any measuring apparatus of the same type of construction is used with the same probe, the same measured value is displayed.

2. Radiation measurement device according to Claim 1, characterised in that probes of differing types of construction can be selectively connected to the measuring apparatus, each probe having a designation of its type stored in a store (L) within the probe, whereby the store is connectable to the calculator through a second parallel-serial converter (PSW1) and through the same conductor (SE) to provide a correlation of the store contents (H1,H2) with the probe type.

3. Radiation measurement device according to one of Claims 1 to 2, characterised in that more than one detector is provided in a single probe, whereby a correction device is provided for each detector, information from each of which is transmitted through the conductor (SE) to the calculator.

4. Radiation measurement device according one of Claims 2 to 3, characterised in that the first bit of successively connected parallel-serial converters is connected to "ground" so that the calculator registers the completed connection of a probe through the conductor (SE) and thereupon a second connecting line (PL) is connected to "ground" so that the content of the store is taken up by the PSW and can be read by the calculator.

## Revendications

1. Dispositif de mesure des radiations, pour radiations photoniques et/ou corpusculaires comprenant :
- un appareil de mesure,
- une sonde comprenant au moins un détecteur (Z) qui fournit comme mesure de l'intensité de la radiation des fréquences d'impulsions électriques ou un signal analogique, et
- une liaison à câble débranchable entre l'appareil de mesure et la sonde,
***caractérisé***
- ***en ce que*** la sonde comprend une mémoire numérique (H1, H2), ainsi qu'un convertisseur parallèle-série (PSW2) raccordé à cette mémoire,
et
- ***en ce que*** l'appareil de mesure comprend, un ordinateur qui peut être connecté à la mémoire numérique (H1, H2) par l'intermédiaire de la ligne (SE) de la liaison à câble débranchable et du convertisseur parallèle-série (PSW2),
- et dans lequel, dans la mémoire (H1, H2), sont mémorisées en numérique des coefficients de correction qui ont été saisis lors de l'étalonnage de la sonde, aussi bien pour la dispersion de la sensibilité du détecteur (Z) dans le cas d'une basse intensité de radiation que pour la dispersion des pertes de saturation du détecteur (Z) dans le cas d'une haute intensité de radiation,
et
- cependant que les données de mesure fournies par le détecteur peuvent être corrigées par l'ordinateur avec utilisation des coefficients de correction mémorisés de telle sorte que, lorsqu'on utilise une quelconque de plusieurs sondes de même type, l'erreur de mesure resultant des dispersions des détecteurs est négligeable et que, lorsqu'un quelconque de plusieurs appareils de mesure de même type est associé à une même sonde, l'appareil affiche toujours la même valeur mesurée.

2. Appareil de mesure des radiations selon la revendication 1,
***caractérisé en ce qu'***on peut brancher au choix sur l'appareil de mesure des sondes de plusieurs types différents dont les différentes identifications de type sont mémorisées dans une mémoire (L) contenu dans la sonde, la mémoire pouvant être connectée à l'ordinateur par l'intermédiaire d'un second convertisseur parallèle-série (PSW1) et par la même ligne (SE), pour associer les contenus des mémoires (H1, H2) aux types de sondes.

3. Appareil de mesure des radiations selon une des revendications 1 à 2,
***caractérisé en ce qu'***une sonde, comprend plus d'un seul détecteur, et que, pour chaque détecteur, il est prévu des dispositifs de correction dont les informations sont aussi transmises à l'ordinateur par l'intermédiaire de la ligne (SE).

4. Appareil de mesure des radiations selon une des revendications 2 à 3,
***caractérisé en ce que*** le premier bit des convertisseurs parallèle-série connectés l'un à la suite de l'autre est connecté à la "masse", de sorte que l'ordinateur enregistre, par l'intermédiaire de la ligne (SE) l'exécution du branchement d'une sonde et met alors une deuxième ligne (PL) à la "masse", de sorte que le contenu de la mémoire est pris en charge par le PSW et peut être lu par l'ordinateur à travers la ligne (SE).
